# EUROPEAN PATENT APPLICATION

(11) **EP 4 825 173 A1**
(43) Date of publication of application: **21.10.2026**
(21) Application number: 25171035.6
(22) Date of filing: 16.04.2025
(51) Int. Cl.: A01N 37/46, A01P 21/00, C05F 11/10

(54) **USE OF AED PEPTIDE, OR A SALT THEREOF, AS A BIOSTIMULANT**

(71) Applicant: Capsa Ellen GmbH, 7000 Chur (CH)
(72) Inventor: DUDKOV, Alexander, 1204 Geneva (CH); HUBER, Daniel, 1248 Hermance (CH)
(74) Representative: Santarelli

(57) **Abstract**

The invention describes the use of AED peptide, or a salt thereof, as a biostimulant, a composition comprising AED peptide, or a salt thereof and a process for stimulating a plant from the genus Linum.

## Description

### Field of Invention

The present invention relates to the use of an ultrashort peptide as a biostimulant for the cultivation of a plant, such as a plant from the order Malpighiales, such as from the genus Linum.

### Background to the invention

This invention pertains to the use of an ultrashort peptide to stimulate plant growth. With the increasing global population and mounting environmental challenges such as climate change (temperature fluctuations, drought, floods, etc.), soil degradation (presence of toxic heavy metals, deficiency of essential nutrients, etc.) and the reduction in permitted chemical inputs, it has become imperative to develop innovative solutions that improve agricultural yields while preserving ecosystems.

Fiber flax (*Linum usitatissimum L*.) has been cultivated worldwide for centuries and serves as a crude material for the production of the food, medicines, textiles and is therefore of great importance for the culture and development of mankind.

Ultrashort peptides, as natural or synthetic molecules, are protein fragments that perform specific biological functions. Their action can appear not only as signalling objects but also as participating in biological processes in plant cultivation.

Ultrashort peptides have numerous advantages compared to their larger counterparts. In particular, it's worth highlighting their economical synthesis both on small and large scales, wide chemical diversity, ease of modification, high biological activity, absorbability, availability, customizable functionalization, high selectivity and specificity, biodegradability and biocompatibility, high safety, low toxicity or low immunogenicity.

The invention described herein introduces the use of AED peptide, or a salt thereof, as a biostimulant, a composition comprising AED peptide, or a salt thereof and a process for biostimulating a plant from the genus Linum. In particular, the invention determines the influence of AED peptide on seed sowing qualities and growth indicators at the initial stages of ontogenesis in the cultivation of plants from the genus Linum.

The invention relates to the use of a peptide consisting of the amino acid sequence AED, or a salt thereof, as a biostimulant.

More specifically, the peptide is an ultrashort peptide, *i.e.* a peptide consisting of very short chains of amino acids, usually between 2 to 7 residues in length. In the present application, unless otherwise indicated, all ranges of values used are to be understood as including the limits.

The peptide according to the invention is a tripeptide, wherein the amino acid sequence is written from N-terminus to C-terminus, *i.e.* of the formula H-Ala-Glu-Asp-OH.

Preferably, the peptide comprises L-amino acids, preferably consists of L-amino acids. Thus, AED peptide is a tripeptide L-Ala-L-Glu-L-Asp. More preferably, the peptide according to the invention is a tripeptide having an amino acid sequence of AED, wherein the amino acids are L-amino acids, and wherein the amino acid sequence is written from N-terminus to C-terminus.

The tripeptide may be used as a free peptide or in the form of a water soluble salt, such as a sodium, potassium, ammonium or zinc salt. Preferably, the AED peptide, or a salt thereof, is an isolated peptide. Advantageously, the AED peptide is a synthetic peptide, and also referred to as Cartalax.

Preferably, AED peptide, or a salt thereof, is used at an "effective dose", *i.e.* at a quantity of AED peptide, or a salt thereof, sufficient to trigger the biostimulant effect of the peptide.

By "biostimulant", it is intended to mean any product or composition that improves one or more of the following natural processes in a plant or their rhizosphere: growth and/or immune responses and/or productivity and/or resilience to stress (*i.e.* drought, salinity or extreme temperatures), in comparison to natural processes that would occur in the absence of a biostimulant. A biostimulant is to be distinguished from biofertilizers, which supply nutrients to the plant and/or improve soil organic matter.

By "growth", it is intended to mean the process by which a plant increases in size, mass, and complexity over time. More specifically, the growth of a plant encompasses one or more of the following stages: germination (*i.e.* activation of the seed and emergence of a sprout) and/or vegetative growth (*i.e.* development of leaves, stems and roots) and/or reproductive growth (*i.e.* formation of flowers, fruit and seeds) and/or maturation and senescence (*i.e.* completion of the growth cycle and eventual aging).

By "germination", it is intended to mean the process by which a seed develops into a sprout. It is the initial stage of growth in the life cycle of a plant. Germination typically begins when the seed absorbs water, a process called imbibition, and the environmental conditions such as temperature, oxygen, and light are favorable.

By "sprout", it is intended to mean the initial organism emerging from the seed after it begins to germinate. A sprout usually consists of an embryonic radicle (*i.e.* the first root that emerges from the seed, anchoring the plant and absorbing water and nutrients) and/or an hypocotyl (*i.e.* the stem-like structure that connects the root to the developing leaves) and/or cotyledons (*i.e.* the initial leaves, which often store nutrients to support early growth).

Germination can be assessed by counting normally germinated seeds in a sample taken for analysis, and is expressed as a percentage (GOST (National Standard) 12038-84 "Seeds of agricultural crops. Methods of the germination determination"). It has been considered that a normally germinated seed is one that has normally developed a radicle, an hypocotyl, one or more cotyledons and an epicotyl, *i.e.* that the radicle is not shorter than the seed itself and that the hypocotyl, cotyledons and epicotyl put together are not shorter than half a seed.

In the laboratory, germination capacity of a seed is assessed after 7 days in optimal germination conditions. In the field, germination capacity of a seed is measured by the number of seeds that have germinated, expressed as a percentage of the total number of seeds sown. Germination capacity should be close to 90-100%. Below 90%, sowing these seeds in the field will be sparse, and may lead to low yields.

Germination in the field depends on several parameters such as the germination energy.

By "germination energy", it is intended to mean the number of seeds that have germinated on the 3^{rd} day after sowing in the field, and is expressed as a percentage.

By "productivity", it is intended to mean the capacity of a plant to selectively produce biomass or yields (grain, fruit, fiber, etc.) over a given period.

By "plant", it is intended to mean any part of a plant at any stage of its development. In a non-limitative way, the word "plant" includes any of the following elements: seed, root, stem, leaf, flower, fruit, node and internode, bud; and/or at any stages of development of a plant: sprout, seedling, juvenile plant and mature plant.

By "seedling", it is intended to mean a young plant that has grown past the sprout stage, and that is capable of photosynthesis.

By "juvenile plant", it is intended to mean a plant that has grown beyond the seedling stage but has not yet reached maturity. It is in an intermediate stage of development characterized by active growth but lacks the ability to reproduce (e.g., produce flowers, fruits, or seeds).

By "mature plant" it is intended to mean a plant that is a fully developed, and has completed its vegetative growth and has entered the reproductive phase of its life cycle. At this stage, the plant is capable of producing flowers, fruits, and seeds, which are essential for reproduction and propagation.

AED peptide, or a salt thereof, is used as a biostimulant, such as an activator of growth of the plant.

More specifically, AED peptide, or a salt thereof, is used as a root stimulant.

By "root stimulant", it is intended to mean a biostimulant that improves root growth in a plant (*i.e.* the root development in length, weight, thickness and complexity), in comparison to natural processes that would occur in the absence of a root stimulant.

By "root", it is intended to mean the part of a plant conveying water and nourishment to the rest of the plant. The roots can be organized into two distinct systems, *i.e.* either a taproot system or a fibrous root system. Both root systems are composed of primary and secondary (or lateral) roots. Roots can also arise from non-root tissues, such as the base of the stem or nodes, instead of growing from the embryonic radicle. Said roots are called "adventitious roots".

By "primary roots", it is intended to mean the early roots that are formed from the embryonic radicle after germination.

By "secondary (or lateral) roots", it is intended to mean roots that develop from the pericycle of the primary root and grow laterally (horizontally or obliquely) outward.

In a taproot system, the primary root is a taproot.

By "taproot", it is intended to mean the main, central root of a plant's root system that grows vertically downward and becomes the dominant root in a plant with a taproot system. The taproot often grows deep into the soil.

In a taproot system, secondary roots are lateral roots that branch out from the taproot, and typically grow horizontally or diagonally. The taproot system is common in dicotyledonous plants, such as carrots, radishes, beets, dandelions, turnips, etc.

In a fibrous root system, a network of thin, branching roots spread out in all directions. It typically lacks a central, dominant root (like a taproot) and instead consists of many roots that are similar in size. The primary root, which initially develops from the embryonic radicle, is short-lived and stops growing early. It is replaced by a cluster of secondary roots of approximately equal size that arise from the base of the stem. These secondary roots form the characteristic fibrous root system.

The fibrous root system is common in monocotyledonous plants such as grasses, wheat, rice, and corn.

Advantageously, AED peptide, or a salt thereof, improves the growth of the roots of the plant at any stage of growth.

By "improve the growth of the roots of a plant", it is intended to mean at least increasing the length of the roots of said plant.

Advantageously, AED peptide, or a salt thereof, increases the roots length by 10%, more advantageously by 25%, even more advantageously by 35% compared with an untreated seed.

More specifically, AED peptide, or a salt thereof, is used to improve the growth of the primary roots.

Advantageously, AED peptide, or a salt thereof, increases the primary root length by 10%, more advantageously by 25%, even more advantageously by 35%, compared with an untreated seed.

Advantageously, AED peptide, or a salt thereof, promotes the emergence of adventitious roots.

By "promotes the emergence of roots", it is intended to mean that the peptide increases the number of emerging roots and/or the speed of root emergence.

Advantageously, AED peptide, or a salt thereof, promotes the emergence of adventitious roots from a treated plant by 10%, more advantageously by 30% compared with an untreated plant.

Advantageously, AED peptide, or a salt thereof, increases the adventitious roots length by 10%, more advantageously by 25%, even more advantageously by 35% compared with an untreated seed.

Alternatively, AED peptide, or a salt thereof, is used a shoot system stimulant.

By "shoot system stimulant", it is intended to mean a biostimulant that improves shoot system growth in a plant (*i.e.* the shoot system development in length, weight, thickness and complexity), in comparison to natural processes that would occur in the absence of a shoot system stimulant.

By "shoot system", it is intended to mean the part of a plant that are not roots. The shoot system is responsible for several key functions, including photosynthesis, reproduction, and support. It includes the following components: the stem, leaf, flower, fruit, bud. Together, these parts enable the plant to grow, reproduce, and adapt to its environment.

Advantageously, AED peptide, or a salt thereof, increases the shoot system length by 5%, more advantageously by 15%, even more advantageously by 30% compared with an untreated seed.

Advantageously, AED peptide, or a salt thereof, increases the shoot system dry weight by 5%, more advantageously by 15%, even more advantageously by 35% compared with an untreated seed.

Advantageously, AED peptide, or a salt thereof, increases the shoot crude weight by 5%, more advantageously by 15%, even more advantageously by 35% compared with an untreated seed.

Advantageously, AED peptide is used to treat a plant from the order Malpighiales.

Malpighiales are an order of dicotyledonous plants that include notably the following families: Achariaceae, Balanopaceae, Bonnetiaceae, Caryocaraceae, Centroplacaceae, Chrysobalanaceae, Clusiaceae (*i.e.* Guttiferae), Ctenolophonaceae, Dichapetalaceae, Elatinaceae, Erythroxylaceae, Euphorbiaceae, Euphroniaceae, Goupiaceae, Humiriaceae, Hypericaceae, Irvingiaceae, Ixonanthaceae, Lacistemataceae, Linaceae, Lophopyxidaceae, Malesherbiaceae, Malpighiaceae, Medusagynaceae, Ochnaceae, Pandaceae, Passifloraceae, Peridiscaceae, Phyllanthaceae, Picrodendraceae, Podostemaceae, Putranjivaceae, Quiinaceae, Rafflesiaceae, Rhizophoraceae, Salicaceae, Trigoniaceae, Turneraceae, Violaceae.

Advantageously, AED peptide is used to treat a plant from any of the above-cited families from the order Malpighiales.

In particular, AED peptide is used to treat a plant from the family Linaceae.

More particularly, AED peptide is used to treat a plant from any of the genus of the family Linaceae, *i.e.* Adenolinum, Anisadenia, Cliococca, Cyrillopsis, Durandea, Hesperolinon, Hugonia, Linum, Millegrana, Phyllocosmus, Radiola, Reinwardtia, Roucheria, Sclerolinon, Tirpitzia.

Preferably, AED peptide, or a salt thereof, is used to treat a plant from the genus Linum.

Linum is a genus of plants that comprises herbaceous plants with fibrous stems, simple leaves and 5-petaled flowers.

Advantageously, AED peptide, or a salt thereof, is used to treat a plant from any the species of the genus Linum, *e.g. Linum acuticarpum, Linum adustum, Linum aethiopicum, Linum africanum, Linum alatum, Linum album, Linum allredii, Linum alpinum, Linum altaicum, Linum amurense, Linum arboreum, Linum arenicola, Linum aretioides, Linum aristatum, Linum aroanium, Linum australe, Linum austriacum, Linum bahamense, Linum berlandieri, Linum bessarabicum, Linum betsiliense, Linum bienne, Linum boissieri, Linum brachypetalum, Linum brevifolium, Linum brevisepalum, Linum brevistylum, Linum burkartii, Linum caespitosum, Linum campanulatum, Linum capitatum, Linum cariense, Linum carneum, Linum carnosulum, Linum carteri, Linum catharticum, Linum chaborasicum, Linum chamissonis, Linum ciliatum, Linum compactum, Linum comptonii, Linum corymbiferum, Linum corymbulosum, Linum cratericolum, Linum cremnophilum, Linum cruciatum, Linum cubense, Linum decumbens, Linum densiflorum, Linum doerfleri, Linum dolomiticum, Linum elegans, Linum elongatum, Linum emimense, Linum empetrifolium, Linum erigeroides, Linum ertugrulii, Linum esterhuysenae, Linum extraaxillare, Linum filiforme, Linum flagellare, Linum flavum, Linum floridanum, Linum glaucum, Linum goulimyi, Linum gracile, Linum grandiflorum, Linum guatemalense, Linum gyaricum, Linum gypsogenium, Linum harlingii, Linum hellenicum, Linum heterosepalum, Linum heterostylum, Linum hirsutum, Linum hologynum, Linum hudsonioides, Linum hypericifolium, Linum imbricatum, Linum intercursum, Linum iranicum, Linum junceum, Linum katiae, Linum kaynakiae, Linum keniense, Linum kingii, Linum komarovii, Linum lasiocarpum, Linum leonii, Linum leucanthum, Linum lewisii, Linum littorale, Linum longipes, Linum lundellii, Linum macraei, Linum macrocarpumLinum macrorhizum, Linum marginale, Linum maritimum, Linum marojejyense, Linum mcvaughii, Linum medium, Linum meletonis, Linum mexicanum, Linum modestum, Linum monogynum, Linum mucronatum, Linum mysorense, Linum narbonense, Linum nelsonii, Linum neomexicanum, Linum nervosum, Linum nodiflorum, Linum numidicum, Linum nutans, Linum obtusatum, Linum ockendonii, Linum olgae, Linum olympicum, Linum orizabae, Linum pallasianum, Linum pallescens, Linum pamphylicum, Linum perenne, Linum persicum, Linum peyronii, Linum phitosianum, Linum polygaloides, Linum pratense, Linum pringlei, Linum prostratum, Linum puberulum, Linum pubescens, Linum punctatum, Linum pungens, Linum quadrifolium, Linum ramosissimum, Linum rigidum, Linum rupestre, Linum rzedowskii, Linum scabrellum, Linum schiedeanum, Linum scoparium, Linum seljukorum, Linum setaceum, Linum silpii, Linum smithii, Linum stelleroides, Linum stocksianum, Linum striatum, Linum strictum, Linum subbiflorum, Linum subteres, Linum suffruticosum, Linum sulcatum, Linum tauricum, Linum teneflum, Linum tenue, Linum tenuifolium, Linum thesioides, Linum thracicum, Linum thunbergii, Linum tmoleum, Linum toxicum, Linum triflorum, Linum trigynum, Linum turcomanicum, Linum ucranicum, Linum unguiculatum, Linum uninerve, Linum usitatissimum, Linum vanense, Linum velutinum, Linum vernale, Linum villarianum, Linum villosum, Linum violascens, Linum virginianum, Linum virgultorum, Linum viscosum, Linum volkensii, Linum vuralianum, Linum westii, preferably Linum usitatissimum.*

As mentioned above, AED peptide, or a salt thereof, is used as a root stimulant.

In particular, AED peptide, or a salt thereof, is used to improve root growth in a plant of the order Malpighiales, preferably a plant from the family Linaceae, still preferably a plant from the genus Linum, such as *Linum usitatissimum.*

Advantageously, AED peptide, or a salt thereof, increases the roots length of a plant of the genus Linum by 10%, more advantageously by 25%, even more advantageously by 35% compared with an untreated seed.

More specifically, AED peptide, or a salt thereof, increases the primary root length of a plant of the genus Linum by 10%, more advantageously by 25%, even more advantageously by 35%, compared with an untreated seed.

Advantageously, AED peptide, or a salt thereof, promotes the emergence of adventitious roots of a plant of the genus Linum.

Advantageously, AED peptide, or a salt thereof, promotes the emergence of adventitious roots of a plant of the genus Linum from a treated plant by 10%, more advantageously by 30%, compared with an untreated plant.

Advantageously, AED peptide, or a salt thereof, increases the adventitious roots length of a plant of the genus Linum by 10%, more advantageously by 25%, even more advantageously by 35% compared with an untreated seed.

As mentioned above, AED peptide, or a salt thereof, can also be used a shoot system stimulant.

Advantageously, AED peptide, or a salt thereof, increases the shoot system length of a plant of the genus Linum by 5%, more advantageously by 15%, even more advantageously by 30% compared with an untreated seed.

Advantageously, AED peptide, or a salt thereof, increases the shoot system dry weight of a plant of the genus Linum by 5%, more advantageously by 15%, even more advantageously by 35% compared with an untreated seed.

Advantageously, AED peptide, or a salt thereof, increases the shoot crude weight of a plant of the genus Linum by 5%, more advantageously by 15%, even more advantageously by 35% compared with an untreated seed.

More specifically, AED peptide, or a salt thereof, is used to treat any part of a plant, such as from the genus Linum at any stage of its development. In a non-limitative way, AED peptide, or a salt thereof, is used to treat any of the following parts of a plant: seed, root, stem, leaf, flower, fruit, node and internode, bud.

AED peptide, or a salt thereof, can be used to treat seed.

By "seed", it is intended to mean the unit of reproduction of a plant, capable of developing into another such plant.

More particularly, AED peptide, or a salt thereof, is used to treat seed and improves the embryonic radicle growth.

By "embryonic radicle", it is intended to mean the first root that emerges from the seed during germination. It is part of the seed's embryo.

Advantageously, AED peptide, or a salt thereof, increases the embryonic radicle length from a treated seed by 10%, more advantageously by 25%, even more advantageously by 35% compared with an untreated seed.

Advantageously, AED peptide, or a salt thereof, increases germination capacity by 5%, more advantageously by 20%, even more advantageously by 35% compared with an untreated seed.

Advantageously, AED peptide, or a salt thereof, increases germination energy by 30%, more advantageously by 40%, even more advantageously by 50% compared with an untreated seed.

In particular, AED peptide, or a salt thereof, is used to treat seed of a plant of the order Malpighiales, preferably a plant from the family Linaceae, still preferably a plant from the genus Linum, such as *Linum usitatissimum.*

Advantageously, AED peptide, or a salt thereof, increases the embryonic radicle length from a treated seed of a plant of the genus Linum by 10%, more advantageously by 25%, even more advantageously by 35% compared with an untreated seed.

Advantageously, AED peptide, or a salt thereof, increases germination capacity of a seed of a plant of the genus Linum by 5%, more advantageously by 20%, even more advantageously by 35% compared with an untreated seed.

Advantageously, AED peptide, or a salt thereof, increases germination energy of a seed of a plant of the genus Linum by 30%, more advantageously by 40%, even more advantageously by 50% compared with an untreated seed.

AED peptide, or a salt thereof, can also be used to treat roots of the plant.

Preferably, AED peptide, or a salt thereof, is used to treat roots of the plant by ground spreading.

By "ground spreading a product", it is intended to mean applying said product directly to the soil surface around the plant. After being ground spread, the product is absorbed by the soil and diffuse through the soil until it is up taken by plant roots.

Advantageously, AED peptide, or a salt thereof, is in liquid form and can be ground spread using a sprayer, atomizer, drip irrigation system or any other device capable of enabling soil treatment using a liquid product.

Alternatively, AED peptide, or a salt thereof, is in solid form and can be ground spread using a spreader or any other device capable of enabling soil treatment using a solid product (*e.g*. granules, microgranules, wettable powders, dry powders, tablets or briquettes, etc.).

AED peptide, or a salt thereof, can also used to treat the shoot system of the plant.

By "treat the shoot system by a product", it is intended to mean applying said product directly to the above-ground parts of the plant, *i.e.* the shoot system of the plant, which include the stems, branches, leaves, flowers, and buds.

Advantageously, AED peptide, or a salt thereof, is in liquid form and can be applied to the shoot system of the plant using a sprayer, atomizer, drip irrigation system or any other device capable of enabling the treatment of the shoot system of a plant using a liquid product.

Preferably, AED peptide, or a salt thereof, is used to treat the shoot system of the plant by spraying.

Preferably, AED peptide, or a salt thereof, is in the form of a powder.

More preferably, AED peptide, or a salt thereof, is formulated in the form of granules, microgranules, wettable powders, dry powders, tablets or briquettes, preferably a wettable powder.

Alternatively, AED peptide, or a salt thereof, is in the form of a liquid solution.

By "liquid solution", it is intended to mean that the solution is in liquid form at ambient temperature under normal conditions of atmospheric pressure. Advantageously, the liquid solution can be an aqueous solution, an oil or an emulsion. Preferably, the liquid solution is an aqueous solution.

More specifically, AED peptide, or a salt thereof, may be an aqueous solution formulated by dissolving AED peptide in the form of a powder into water (such as sterile water or tap water) while stirring.

Preferably, AED peptide, or a salt thereof, is formulated as an aqueous solution at a concentration comprised between 10⁻²⁰ and 0.01 g/L. More preferably, AED peptide, or a salt thereof, is formulated as an aqueous solution at a concentration comprised between 10⁻¹⁵ to 10⁻⁶ g/L. Even more preferably, AED peptide, or a salt thereof, is formulated as an aqueous solution at a concentration comprised between 10⁻¹⁵ to 10⁻¹⁰ g/L.

The invention also concerns a method for stimulating a plant by bringing into contact said plant with a peptide consisting of AED peptide, or a salt thereof.

By "stimulating a plant", it is intended to mean improving one or more of the following natural processes in said plant or its rhizosphere: growth and/or immune responses and/or productivity and/or resilience to stress (*i.e.* drought, salinity or extreme temperatures), in comparison to natural processes that would occur in the absence of stimulation.

In said method, the biostimulant (administration, etc.), the plant and the peptide are as described above, including preferential features and embodiments.

The invention also relates to a composition comprising AED peptide, or a salt thereof, and a plant protection product.

By "plant protection product", it is intended to mean any substance or mixture of substances used to protect a plant or a plant product from harmful organisms or diseases. These products help prevent or control pests (such as insects, fungi, and weeds), as well as plant diseases, thus ensuring the health and productivity of crops. In a non-limitative way, "plant protection products" includes insecticides, fungicides, herbicides, bactericides, biocides.

Such plant protection product can be a chemical pesticide (*e.g*. pyrethroids, carbamates, organophosphates, neonicotinoids, sulfur, copper compounds, triazoles, chlorothalonil, mancozeb, glyphosate, 2,4-D, atrazine, etc.), or a natural pesticide (*e.g*. neem oil, etc.).

The composition can be in the form of a solid or a liquid.

Preferably, the composition further comprises an adjuvant, additive and/or active ingredient, such as:
- Fertilizers (*e.g*. micronutrients, phosphates, phosphoric acid, nitrates salts, potassium salts, ammonium salts, urea etc.);
- Adjuvants and fillers useful in agronomy (*e.g*. non-ionic surfactants, stickers and spreaders, wetting agents, adhesives, penetrants, dispersants, acidifiers, and crop oils);
- Other additives (*e.g*. diatomaceous earth, etc.);
- Chelating agents (*e.g*. EDTA, citric acid, etc.);
- Solvents and solubilizers (*e.g*. water, ethanol or isopropanol, propylene glycol, etc.).

The invention further relates to a process for stimulating a plant, comprising the following steps:
a. treating said plant with AED peptide, or a salt thereof,
b. cultivating said plant.

A "plant", "genus Linum" and "AED peptide, or a salt thereof" are as described above, including the preferred and advantageous features and embodiments.

In the processes according to the invention, the use of AED peptide, or a salt thereof, is advantageously, as described above, including the preferred and advantageous features and embodiments.

By "treating", it is intended to mean any of the following methods of treating a plant: spreading, spraying (soil or foliar spraying), fertilizing irrigation, seed coating or soaking, soil application, soil injection, controlled diffusion (granules or capsules), aerial application, encapsulation, or biocarriers.

By "cultivating", it is intended to mean any process of promoting growth and development of a plant. Growing a plant generally involves cultivating the plant in a medium or substrate suitable for growth and development. Typical methods of growing a plant include, but are not limited to, cultivation in pots or containers, cultivation in the ground, hydroponics, aquaponics, soilless cultivation on an artificial substrate, cultivation by vegetative propagation (cuttings).

By "substrate suitable for growth and development", it is intended to mean a solid substrate, such as moist filter papers, soil, sand, decaying organic matter, on which plants anchor themselves to grow, live and/or from which they derive nutrients.

By "medium suitable for growth and development", it is intended to mean a liquid medium, such as water, water enriched in essential nutrients, that does not allow plant anchoring, but contributes to the nutritional supply of the plants.

Preferably, the process according to the invention is for stimulating roots of the plant and/or stimulating the shoot system of the plant.

Preferably, the treatment in step a. can be carried out on a plant from the genus Linum. "Genus Linum" is as described above, including the preferred and advantageous features and embodiments.

Preferably, in that case, the treatment in step a) is carried out on a plant of the order Malpighiales, preferably a plant from the family Linaceae, still preferably a plant from the genus Linum, such as *Linum usitatissimum.*

Preferably, the treatment in step a) can be carried out on a seed.

Preferably, in that case, the treatment in step a) is carried out on a seed from a plant of the order Malpighiales, preferably a plant from the family Linaceae, still preferably a plant from the genus Linum, such as *Linum usitatissimum.*

Any of the following methods can be used to carry out the seed treatment: seed dressing, seed coating, seed pelleting, seed dusting, seed soaking, spreading, spraying, watering, fertilizing irrigation or any other seed applications.

The seed treatment aims at optimizing the health, the growth and the productivity of the a plant by improving its development conditions and nutritional values.

The treatment in step a) can comprises a step of soaking of the seed in a liquid solution comprising AED peptide, or a salt thereof.

By "soaking", it is intended to mean the complete submersion of a seed in a liquid formulation of AED peptide, or a salt thereof, so that it is surrounded by the liquid on all sides.

Alternatively, the treatment in step a. comprises a step of applying AED peptide, or a salt thereof, to the soil.

By "applying AED peptide, or a salt thereof, to the soil", it is intended to mean any of the following methods of treating the soil: spreading, spraying, wattering, fertilizing irrigation, or any other soil applications, soil injection.

The soil on which the AED peptide, or a salt thereof, is applied, is the soil around the plant.

Advantageously, the treatment in step a) of the process according to the invention comprises a step of soaking the seed in a solution comprising AED peptide, or a salt thereof followed by a step of applying AED peptide, or a salt thereof, to the soil, such as during step b).

Still alternatively, the treatment in step a) comprises a step of applying AED peptide, or a salt thereof, on the shoot system of the plant.

By "applying AED peptide, or a salt thereof, on the shoot system of the plant", it is intended to mean foliar spraying or any other methods suitable for treating the shoots of a plant.

### Brief description of the Drawings

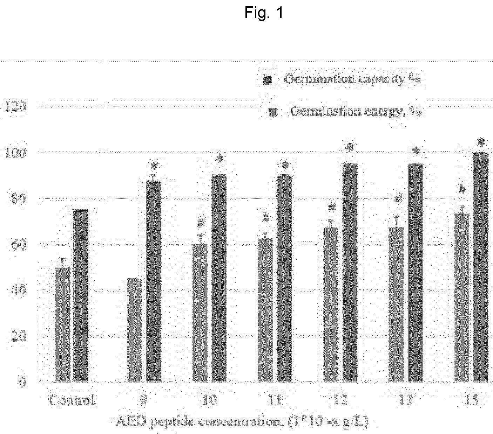

Other features and advantages of the invention will become clear from the following examples, given by way of illustration, with reference to Figure 1, which represents diagram showing the effect of different concentrations of the AED peptide on germination energy and germination of the fiber flax seeds of Tverskoy variety (mean data for four repetitions +/- confidence interval). Note: *, # - statistically significant differences at 5% significance level compared to control, respectively

### Example:

### 1. Material and Methods:

### 1.1. Step 1: Seed soaking

Seeds from fiber flax (*Linum usitatissimum L*.), Tverskoy variety were treated by soaking in different solutions containing either distilled H₂O alone (control condition), or AED peptide in distilled H₂O at various concentrations (*i.e* 1x10⁻⁹, 1x10⁻¹⁰, 1x10⁻¹¹, 1x10⁻¹², 1x10⁻¹³ and 1x10⁻¹⁵ g/L) (experimental conditions). 20 seeds were tested for each condition. The seeds were soaked for 2 hours. The experiment was repeated 4 times.

### 1.2. Step 2: Germination capacity

After soaking, the seeds were germinated on filter paper in 95mm diameter Petri dishes in a germination medium of the same type as the soaking medium in which the seeds were pretreated, *i.e.* either distilled H₂O alone (control condition), or AED peptide in distilled H₂O, at various concentrations (*i.e.* 1x10⁻⁹, 1x10⁻¹⁰, 1x10⁻¹¹, 1x10⁻¹², 1x10⁻¹³ and 1x10⁻¹⁵ g/L) (experimental conditions). The Petri dishes containing the seeds were placed in a growth chamber for constant conditions with program control (Binder KBW 720) at a temperature of 21°C and a constant humidity of 60%. Seeds were watered daily with tap water for 7 days.

### 1.3. Step 3: Analysis

The number of the germinated seeds was counted on the 3^{rd} and 7^{th} day. Germinated seeds were considered those that had a normally developed a sprout. The embryonic radicle had to be not shorter than the seed itself and the shoot not shorter than half a seed.

At the end of the experiment, the characteristics of germination capacity were determined: germination energy on the 3^{rd} day and germination capacity on the 7^{th} day (GOST (National Standard) 12038-84 "Seeds of agricultural crops. Methods of the germination determination"). $Germination energy = \frac{number of seeds germinated within 3 days}{number of seeds in the experiment} ∗ 100 , %$ $Germination capacity = \frac{number of seeds germinated within 7 days}{number of seeds in the experiment} ∗ 100 , %$

In addition, the intensity of germination capacity was measured by the length of embryonic radicle and shoot system. This involved measuring the greatest distance from the main germ root to the central shoot, *i.e.* the distance between the lower point of the main germ root and the upper point of the central shoot.

The dry and crude weight of the sprouts and the average length of the shoot system and embryonic radicle, respectively, were determined using analytical scales. All plants were divided into separate organs (shoot system and embryonic radicle) and weighed. The yield of the plant's crude biomass was measured by determining the total weight of the fresh biomass for each geographical area of cultivation. Samples were taken from an area of 1x1 m² in a crop field and their mass has been determined. To determine the percentage of dry matter, individual parts of a plant (shoot system and embryonic radicle) have been carefully crushed, and 5-10 g of samples were collected. These samples were placed in buckets or paper bags and dried in a drying cabinet at a temperature of 105 ° C to a constant weight. The percentage of dry matter in shoot system and embryonic radicle was calculated. The dry biomass of shoot system and embryonic radicle was calculated by multiplying the crude biomass of these plant parts by the percentage of dry matter in them. The total dry biomass of a plant is calculated for each repeat by summing the dry biomass of individual plant parts.

### 2. Results:

Figure 1 shows that a treatment with the AED peptide had a positive effect on the germination energy of the fiber flax seeds of Tverskoy variety, except when AED peptide was at a concentration of 10⁻⁹ g/L.

The highest germination energy was observed when seeds were treated with AED peptideat the following concentrations: 10⁻¹², 10⁻¹³ and 10⁻¹⁵ g/L. Indeed, germination energy was respectively of 68, 68 and 74%, *i.e.* respectively 36-48% higher than the control.

The results also showed that the application of the AED peptide had a positive effect on germination of fiber flax seeds at all tested concentrations. The highest percentage of germinating fiber flax seeds was also observed with seed treated with AED peptide at the concentration of 10⁻¹⁵ g/L and was 100%, which is 33.3% more than the control (75%).

Table 1 shows that a treatment of the seeds of the fiber flax seeds of Tverskoy variety with AED peptide had a positive effect on morphometric parameters of the fiber flax sprouts of Tverskoy variety at all concentrations tested.

**Table 1 - Effect of different concentrations of the AED peptide on morphometric parameters of Tverskoy variety fiber flax (mean data for four replicates ± confidence interval)**

| Concentration of AED, in water (g/L) | Average length, mm | | Sprouts total weight, g | |
|---|---|---|---|---|
| | Shoot system | Embryonic radicle | Crude | Dry |
| Control (water) | 23.01±0.04 | 39.51±0.05 | 1.1±0.01 | 0.149±0.004 |
| 1*10⁻⁹ g/L | 25.01±0.05* | 46.02±0.05* | 1.21±0.01* | 0.158±0.003* |
| 1*10⁻¹⁰ g/L | 26.01±0.05* | 49.0±0.04* | 1.26±0.01* | 0.158±0.003* |
| 1*10⁻¹¹ g/L | 26.9±0.05* | 51.02±0.06* | 1.3±0.01* | 0.173±0.003* |
| 1*10⁻¹² g/L | 28.7±0.04* | 53.2±0.07* | 1.41±0.01* | 0.193±0.004* |
| 1*10⁻¹³ g/L | 30.51±0.04* | 54.3±0.04* | 1.51±0.01* | 0.203±0.004* |
| 1*10⁻¹⁵ g/L | 33.21±0.05* | 56.5±0.05* | 1.61±0.01* | 0.232±0.004* |
| LSD₀₅ | 1.36 | 2.46 | 0.04 | 0.01 |

| | | | | |
|---|---|---|---|---|
| Remark: * - statistically significant differences at 5% significance level compared to control | | | | |

The sprouts whose seeds were treated with the AED peptide at concentrations of 10⁻¹², 10⁻¹³ and 10⁻¹⁵ g/L showed the best results.

Indeed, the average length of the shoot system obtained from seeds of the fiber flax of Tverskoy variety treated with AED peptide at a concentration of 10⁻¹⁵ g/L was 33.2 mm, compared with only 23.01 mm when the seeds were treated with control. It represents an increment of 30.4%. Similarly, the average length of the roots obtained from seeds of the fiber flax of Tverskoy variety treated with AED peptide at a concentration of 10⁻¹⁵ g/L was 56.5 mm, compared with only 39.51 mm when the seeds were treated with control. It represents an increment of 30%.

A treatment with the AED peptide significantly affected not only morphometric parameters, but also the biomass of the fiber flax sprouts of Tverskoy variety. The crude weight of seedlings emerged from seeds treated with AED peptide at a concentration of 10⁻¹⁵ g/L was the highest, *i.e.* 1.61 g, compared with only 1.1 g when the seeds were treated with control. Thus, the increase was 46.3%. In the other experimental conditions, this indicator varied from 1.15 g to 1.51 g.

Seed treatment with the AED peptide at the concentration of 10⁻¹⁵ g/L also showed the maximum values of the sprouts dry weigh, *i.e.* 0.23 g, which represents a 53% increase compared to seeds treated with the control, *i.e.* 0.15 g.

## Claims

1. Use of a peptide consisting of the amino acid sequence AED, or a salt thereof, as a biostimulant.

2. The use of claim 1, wherein the biostimulant is a root stimulant.

3. The use of claim 1 or 2, wherein the biostimulant is a shoot system stimulant.

4. The use of any of claims 1 to 3, wherein AED peptide or a salt thereof, is used to treat a plant from the genus Linum.

5. The use of any of the claims 1 to 4, wherein AED peptide, or a salt thereof, is used to treat seed.

6. The use of any of claims 1 to 4, wherein AED peptide, or a salt thereof, is used to treat roots of the plant.

7. The use of any of claims 1 to 4, wherein AED peptide, or a salt thereof, is used to treat the shoot system of the plant.

8. The use of any of claims 1 to 7, wherein AED peptide, or a salt thereof, is in the form of a powder.

9. The use of any of claims 1 to 7, wherein AED peptide, or a salt thereof, is in the form of a liquid solution.

10. A composition comprising AED peptide, or a salt thereof, and a plant protection product.

11. A process for stimulating a plant, comprising the following steps:
a. treating said plant with AED peptide, or a salt thereof,
b. cultivating said plant.

12. The process of claim 11, wherein the treatment in step a. is carried out on a plant from the genus Linum.

13. The process of claims 11 or 12, wherein the treatment in step a. is carried out on a seed.

14. The process of any of claims 11 to 13, wherein the treatment in step a. comprises a step of applying AED peptide, or a salt thereof, to the soil.

15. The process of any of claims 11 to 14, wherein the treatment in step a. comprises a step of applying AED peptide, or a salt thereof, on the shoot system of the plant.
